(19) Europäisches Patentamt
European Patent Office
Office européen des brevets

(11) **EP 1 606 556 B1**

(12) **EUROPÄISCHE PATENTSCHRIFT**

(45) Veröffentlichungstag und Bekanntmachung des Hinweises auf die Patenterteilung:
**04.03.2015 Patentblatt 2015/10**

(51) Int Cl.:
*F24D 3/12* *(2006.01)*    *F24D 19/10* *(2006.01)*

(21) Anmeldenummer: **04721469.7**

(86) Internationale Anmeldenummer:
**PCT/DK2004/000180**

(22) Anmeldetag: **18.03.2004**

(87) Internationale Veröffentlichungsnummer:
**WO 2004/083733 (30.09.2004 Gazette 2004/40)**

(54) **VERFAHREN ZUM EINSTELLEN MEHRERER PARALLEL GESCHALTETER WÄRMETAUSCHER**

METHOD FOR ADJUSTING SEVERAL PARALLEL CONNECTED HEAT EXCHANGERS

PROCEDE POUR ASSURER LE REGLAGE DE PLUSIEURS ECHANGEURS DE CHALEUR COUPLES EN PARALLELE

(84) Benannte Vertragsstaaten:
**AT BE BG CH CY CZ DE DK EE ES FI FR GB GR HU IE IT LI LU MC NL PL PT RO SE SI SK TR**

(30) Priorität: **22.03.2003 DE 10312825**

(43) Veröffentlichungstag der Anmeldung:
**21.12.2005 Patentblatt 2005/51**

(73) Patentinhaber: **Danfoss A/S**
**6430 Nordborg (DK)**

(72) Erfinder:
• **SEERUP, Joergen**
**DK-8320 Marslet (DK)**
• **GREGERSEN, Niels**
**DK-8464 Galten (DK)**

(74) Vertreter: **Knoblauch, Andreas et al**
**Patentanwälte Dr. Knoblauch PartGmbB**
**Schlosserstrasse 23**
**60322 Frankfurt am Main (DE)**

(56) Entgegenhaltungen:
**DE-A- 3 708 449    DE-A- 19 911 866**

**Beschreibung**

Die Erfindung betrifft ein Verfahren zum Einstellen mehrerer parallel geschalteter Wärmetauscher, denen man ein Wärmeträgermedium zuführt.

Eine Heizungsanlage mit mehreren parallel geschalteten Wärmetauschern ist beispielsweise aus DE 100 57 361 A1 bekannt. Die Wärmetauscher sind hierbei teilweise als Radiatoren und teilweise als Wärmetauscher einer Fußbodenheizung ausgeführt. Sie sind parallel geschaltet, d.h. sie werden von der gleichen Quelle versorgt. Im bekannten Fall ist dies ein Heizkessel, der über ein Mischventil eine Vorlaufleitung speist.

In ähnlicher Weise kann man das Verfahren auch zum Einstellen von Wärmetauschern verwenden, die nicht zur Beheizung eines Raumes, sondern zum Kühlen dienen. Während man beim Beheizen eines Raumes als Wärmeträgermedium ein Fluid verwendet, dessen Temperatur höher ist als die Temperatur des zu temperierenden Raumes, beispielsweise erhitztes Wasser, verwendet man zum Kühlern ein entsprechendes Fluid, dessen Temperatur niedriger ist. Die Problematik ist jedoch in beiden Fällen prinzipiell die gleiche.

Die Erfindung wird im folgenden im Zusammenhang mit einer Heizungsanlage beschrieben. Sie ist aber, wie erwähnt, auch bei entsprechenden Raum-Kühlungen anwendbar. Besonders gut geeignet ist die Erfindung in der Anwendung bei Fußbodenheizungen.

In Fußbodenheizungen setzen die einzelnen Heizkreise der Wärmeträgerflüssigkeit unterschiedliche Strömungswiderstände entgegen. Ein Heizkreis umfaßt dabei einen Wärmetauscher mit seinen Zu- und Ableitungen, wobei man insbesondere bei Fußbodenheizungen vielfach nicht genau zwischen Wärmetauscher und Zuleitung unterscheiden kann. Die unterschiedlichen Strömungswiderstände sind beispielsweise dadurch bedingt, daß ein Heizkreis einen größeren Raum versorgen muß als ein anderer und deswegen eine längere Leitung im Fußboden verlegt ist. Wenn zwei derartige Heizkreise mit unterschiedlichem Widerstand gleichzeitig einen Wärmebedarf anmelden, dann wird der größte Teil des Wärmeträgermediums in den Heizkreis fließen, der den kleinsten Widerstand hat. Dies ist ungünstig, weil der Heizkreis dann nicht die gesamte Wärme aus dem Wärmeträgermedium verbraucht, sondern die Rücklauftemperatur von diesem Heizkreis erhöht wird. Gleichzeitig bekommt der andere Heizkreis nicht genügend Wärmeträgerflüssigkeit, so daß hier die Wärmeabgabe unzureichend ist.

Erwünscht ist vielmehr ein Verhalten, das darin besteht, daß der Heizkreis mit dem größten Widerstand die meiste Heizflüssigkeit erhält, während der Heizkreis mit dem kleineren Strömungswiderstand einen entsprechend geringeren Anteil erhält.

Um dieses Ziel zu erreichen, wird derzeit bei der Installation eine manuelle Einstellung vorgenommen. Gelegentlich wird diese Einstellung auch als "Kompensierung" oder "Durchflußbegrenzung" bezeichnet. Bei dieser Einstellung verändert man die Strömungswiderstände der einzelnen Heizkreise, also der einzelnen Wärmetauscher, so, daß sie einen "passende" hydraulischen Wiederstand bekommen. Wenn dann mehrere, im vorliegenden Beispiel die beiden, Heizkreise den gleichen Wärmebedarf anmelden, dann wird sich die Heizungsflüssigkeit entsprechend dem Bedarf aufteilen.

Diese Vorgehensweise wird zwar derzeit in vielen Fällen praktiziert. Sie ist aber nicht immer zufriedenstellend. Zum einen benötigt man für jeden Heizkreis eine von außen zugängliche Drossel, mit deren Hilfe man den Strömungswiderstand verstellen kann. Zum anderen ist eine Berechnung der Einstellung erforderlich. Diese wird oft dadurch vorgenommen, daß der Strömungswiderstand der einzelnen Heizkreise berechnet wird. Eine derartige Berechnung ist in vielen Fällen nicht besonders genau. Genauere Einstellungen kann man mit Hilfe einer Messung des Strömungswiderstandes oder des Volumenstroms durch die einzelnen Heizkreise vornehmen. Allerdings ist diese Vorgehensweise relativ aufwendig. Anhand der gemessenen oder berechneten Werte müssen die einzelnen Heizkreise eingestellt werden.

Hinzu kommt, daß der Strömungswiderstand der einzelnen Heizkreise in vielen Fällen nur ein unzureichendes Kriterium für die Versorgung der einzelnen Heizkreise ist. Auch der Wärmewiderstand des Fußbodens bei einer Fußbodenheizung oder der Wärmebedarf des Raumes an sich kann einen Einfluß auf die Einstellung haben. Beispielsweise wird man bei einem Teppichboden einen anderen Wärmebedarf haben als bei einem Klinkerfußboden. Ein im Süden gelegener Raum, der häufiger einer Sonneneinstrahlung ausgesetzt ist, wird einen anderen Wärmebedarf haben als ein Raum, der an der Wetterseite liegt, beispielsweise im Norden.

DE 199 11 866 A1 zeigt eine Vorrichtung zum Abgleich von Heizkreisen in Großflächen-Heizungsanlagen. Jeder Wärmetauscher dieser Anlage wird mit Heizmittel durchströmt, das von einem Vorlauf zu einem Rücklauf fließt. Zum Abgleich der einzelnen Heizstränge wird eine Temperaturdifferenz zwischen Vorlauf und Rücklauf für jeden Strang ermittelt. Hierzu ist es erforderlich, daß ein Regelgerät die Vorlauf- und Rücklauftemperaturen der geöffneten Kreise misst. Das Regelgerät regelt dann verstellbare Ventile derart, daß der längste Strang mit der niedrigsten Rücklauftemperatur vollständig geöffnet ist und alle anderen Stränge so weit gedrosselt werden, bis ihre Temperaturdifferenz der Temperaturdifferenz des längsten Stranges gleicht.

DE 37 08 449 A1 beschreibt eine Fußbodenheizung mit mehreren Heizkreisen. In jedem Kreis ist ein elektrisch regelbares Ventil angeordnet. Diese Ventile werden dann von Reglern angesteuert. Die Ansteuerung erfolgt dadurch, daß vom Anlagenhersteller eine Zeit vorgegeben wird, in der die Ventile offen sind. Der Regler kann dann dafür sorgen, daß die Ventile in einem veränderlichen Anteil dieses Zeitraums geschlossen werden. Je größer dieser Anteil ist, desto weniger Wärme wird dem jeweiligen Heizkreis zugeführt.

Der Erfindung liegt die Aufgabe zugrunde, die Einstellung leichter vornehmen zu können.

Diese Aufgabe wird gelöst, in dem man folgende Schritte ausführt:

a) Ermitteln für jeden Wärmetauscher einer für den Wärmebedarf des Wärmetauschers spezifischen Größe in einem vorbestimmten Zeitraum, anhand einer Öffnungszeit eines dem Wärmetauscher zugeordneten Ventils in dem Zeitraum oder anhand einer Sollwertabweichung,

b) vergleichen der spezifischen Größen aller Wärmetauscher miteinander und

c) verändern der Einstellung des Wärmetauschers mit der den geringsten Wärmebedarf anzeigenden spezifischen Größe in dem Sinn, den Wärmebedarf zu vergrößern und dabei das Verhältnis der Öffnungszeit zum bestimmten Zeitraum zu vergrößern oder die Sollwertabweichung zu verringern.

Mit dieser Vorgehensweise wird der Wärmetauscher, der den größten Verbrauch an Wärmeträgermedium hat, sozusagen "bestraft". Er erhält in Zukunft einen geringeren Anteil am Wärmeträgermedium dadurch, daß man seine Einstellung verändert und damit dafür sorgt, daß z.B. die Durchflußmenge verringert wird. Hierfür gibt es mehrere Möglichkeiten, die weiter unten näher dargestellt werden. Beispielsweise kann man eine spezifische Größe verwenden, die die durch ein Verhältnis zwischen Öffnungszeiten eines Ventils, das die Durchflußmenge eines Wärmeträgermediums durch den Wärmetauscher steuert, und dem vorbestimmten Zeitraum, oder durch eine Sollwertabweichung gebildet ist. Die Korrektur erfolgt dann in dem Sinn das Verhältnis der Öffnungszeiten zum vorbestimmten Zeitraum im ersten Fall oder die Sollwertabweichung im zweiten Fall zu verringern. Über kurz oder lang wird man auf diese Weise allen Wärmetauschern die gleiche Priorität zumessen können und zwar dadurch, daß alle Wärmetauscher einen gleichen Widerstand aufweisen und damit die gleiche Wärmemenge anfordern können. Dies ist das Ziel der Regelung. Dadurch wird auch der Volumenstrom durch die Wärmetauscher maximiert, was beispielsweise bei Fußbodenheizungen ein deutlicher Vorteil ist, weil dadurch Unterschiede in der Oberflächentemperatur des Fußbodens vermieden werden können. Als spezifische Größe verwendet man, beispielsweise wie oben erwähnt, in einem ersten Fall ein Verhältnis zwischen Öffnungszeiten eines Ventils, das die Durchflußmenge des Wärmeträgermediums durch den Wärmetauscher steuert, und dem vorbestimmten Zeitraum. Mit anderen Worten wird ein Tastverhältnis des Ventils verwendet. Wenn das Ventil in dem vorbestimmten Zeitraum von beispielsweise 48 Stunden für zwölf Stunden geöffnet ist, dann beträgt das Verhältnis 0,25. Im allgemeinen hat ein Wärmetauschern mit einem Kleinen Widerstand ein kleine Öffnungsverhältnis und ein Wärmetauscher mit einem großen Widerstand hat ein großes Öffnungsverhältnis (natürlich unter der Voraussetzung, daß die Variationen beim Wärmebedarf und im Fußbodenaufbau klein sind). Man kann nun bei einem Wärmetauscher, dessen Ventil ein kleines Öffnungsverhältnis hat, die Einstellung in dem Sinne ändern, daß die Durchflußmenge verringert wird. In diesem Fall ist das Ventil gezwungen, länger geöffnet zu bleiben, um die benötigte Menge an Wärmeträgerfluid zu dem Wärmetauscher durchzulassen. In einer weiteren Ausgestaltung kann man als spezifische Größe eine Sollwertabweichung für jeden Wärmetauscher ermitteln und eine Änderung der Einstellung bei dem Wärmetauscher mit der kleinsten Sollwertabweichung vornehmen. Der Wärmetauscher, bei dem die kleinste Sollwertabweichung vorkommt, wird also "bestraft", indem er in Zukunft weniger Wärmeträgermedium bekommt. Die Sollwertabweichung läßt sich in vielen Fällen relativ leicht feststellen, weil sie für den Betrieb eines Reglers ohnehin benötigt wird. Um die Vorstellung zu vereinfachen, wird bei der folgenden Erläuterung davon ausgegangen, daß die spezifische Größe bei einem kleinen Wärmebedarf groß und bei einem großen Wärmebedarf klein ist. In Abhängigkeit der konkreten Ermittlung der spezifischen Grüße können die Verhältnisse auch anders herum sein.

Vorzugsweise verändert man bei allen Wärmetauschern die Einstellung in dem genannten Sinn, mit Ausnahme des Wärmetauschers, dessen spezifische Größe den größten Wärmebedarf anzeigt. Damit läßt sich die gewünschte Einstellung für alle Wärmetauscher relativ schnell bewirken. Der vorbestimmte Zeitraum sollte eine gewisse Größe aufweisen, beispielsweise 48 Stunden oder sogar 7 Tage. Dieser Zeitraum dient im Prinzip nur dazu, die Auswirkungen unerwünschter Einflüsse kleinzuhalten, weil die Einstellung nicht geändert werden sollte, wenn gelüftet wird oder die Sonne scheint. Der zur Mittelwertbildung erforderliche Zeitraum ist zwar relativ lang. Da aber die Einstellung für relativ viele Wärmetauscher gleichzeitig geändert werden können, spielt dieser lange Zeitraum, wenn er erst einmal verstrichen ist, keine Rolle mehr. Man schiebt dann sozusagen ein zeitliches Fenster über die Anlage, so daß man Veränderungen, die sich saisonal ergeben, ebenfalls in die Einstellungen der Wärmetauschern mit einfließen lassen kann.

Vorzugsweise verändert man bei mindestens einem anderen Wärmetauscher die Einstellung in dem Sinn, die spezifische Größe zu vergrößern, also den Wärmebedarf zu verkleinern. Wenn man beispielsweise die Durchflußmenge immer nur verkleinert, besteht theoretisch irgendwann die Möglichkeit, daß die Durchflußmenge auf Null abgesunken ist und kein Wärmetauscher mehr mit Wärme versorgt wird. Dieser Fall wird durch die Erhöhung der spezifischen Größe im Einzelfall sicher vermieden.

Man kann in einer besonders bevorzugten Ausgestaltung anstreben, daß man eine Öffnungszeit im Bereich von 50 bis 80 % des vorbestimmten Zeitraumes für alle Wärmetauscher einstellt. Beispielsweise kann man vorsehen, daß sich im Endergebnis bei allen Wärmetauschern, genauer gesagt deren Ventilen, ein Tastverhältnis von 0,6 ergibt. Dies bedeutet, daß die Ventile in 60 % des vorbestimmten Zeitraums geöffnet sind. Die genauen Werte hängen natürlich auch von der Vorlauftemperatur des Systems ab, in dem die Wärmetauscher angeordnet sind.

In einer bevorzugten Ausgestaltung ist vorgesehen, daß man eine gemeinsame Rücklauftemperatur der Wärmetauscher ermittelt und feststellt, bei welchem Wärmetauscher die Rücklauftemperatur steigt oder fällt, wenn der Wärmetauscher geöffnet oder geschlossen wird, wobei die Einstellung eines Wärmetauschers im Sinn einer Verringerung der spezifischen Größe verändert wird, wenn die Rücklauftemperatur beim Öffnen dieses Wärmetauschers steigt. Im Idealfall sollte man für alle Wärmetauscher die gleiche Rücklauftemperatur haben, wenn der Fußbodenaufbau und der Wärmebedarf pro Fläche des Wärmetauschers für alle Wärmetauscher gleich sind. Wenn sich nun herausstellt, daß beim Öffnen eines Wärmetauschers die Rücklauftemperatur ansteigt, dann ist das ein Zeichen dafür, daß dieser Wärmetauscher im Prinzip zu viel Wärmeträgermedium erhält. Er wird also "bestraft", in dem die spezifische Größe verringert wird, beispielsweise die Durchflußmenge gedrosselt wird. Wenn man hingegen feststellt, daß die Rücklauftemperatur nach Öffnen eines Wärmetauschers absinkt, dann hat dieser Wärmetauscher zu viel Wärme abgegeben, d.h. das von ihm zurücklaufende Wärmeträgermedium ist zu kalt. Er wird also in Zukunft mit mehr Wärmeträgermedium versorgt.

Vorzugsweise ändert man die Einstellung durch Änderung einer Verstärkung in einem Regler. Der Regler kann beispielsweise ein Thermostatelement sein, ein Motorventil oder ein elektrischer p-Band-Steller, bei denen die "Strafe" eine Änderung der Verstärkung ist. Dies läßt sich in vielen Fällen leicht realisieren.

Alternativ oder zusätzlich dazu kann man eine Druckdifferenz über den Wärmetauscher verändern. Bei einer größeren Druckdifferenz erfolgt bei der gleichen Öffnungsweite des Ventils eine größere Durchflußmenge. Die Druckdifferenz läßt sich beispielsweise dadurch verändern, daß man eine Drossel am Eingang oder am Ausgang mit einem größeren oder kleineren Strömungswiderstand versieht. Man kann auch eine Pumpenregelung verwenden, um die Druckdifferenz zu verändern.

In einer weiteren Ausgestaltung ist vorgesehen, daß man die Einstellung dadurch verändert, daß man die maximale Öffnungsweite des Ventils des Wärmetauschers verändert. Wenn man beispielsweise die maximale Öffnungsweite verringert, wird das Ventil gezwungen, länger geöffnet zu bleiben. Dies ist insbesondere dann von Vorteil, wenn man als spezifische Größe das Tastverhältnis des Ventils verändert.

Schließlich kann man die Einstellung durch Veränderung der Öffnungszeiten des Ventil verändern. In diesem Fall ist von Vorteil, daß man das Ventil in Öffnungszeiten, die durch einen Wärmebedarf bestimmt sind, periodisch schließt.

Die Erfindung wird im folgenden anhand von bevorzugten Ausführungsbeispielen in Verbindung mit der Zeichnung näher beschrieben. Hierin zeigen:

Fig. 1　　eine schematische Darstellung einer Heizungsanlage,

Fig. 2　　eine schematische Darstellung eines Regelkreises für einen Wärmetauscher,

Fig. 3　　eine schematische Darstellung eines Reglers,

Fig. 4　　mehrere Zeitverläufe zur Erläuterung des Reglers nach Fig. 3,

Fig. 5　　eine andere Ausgestaltung eines Reglers und

Fig. 6　　Darstellungen zur Erläuterung der Funktionsweise des Reglers nach Fig. 5.

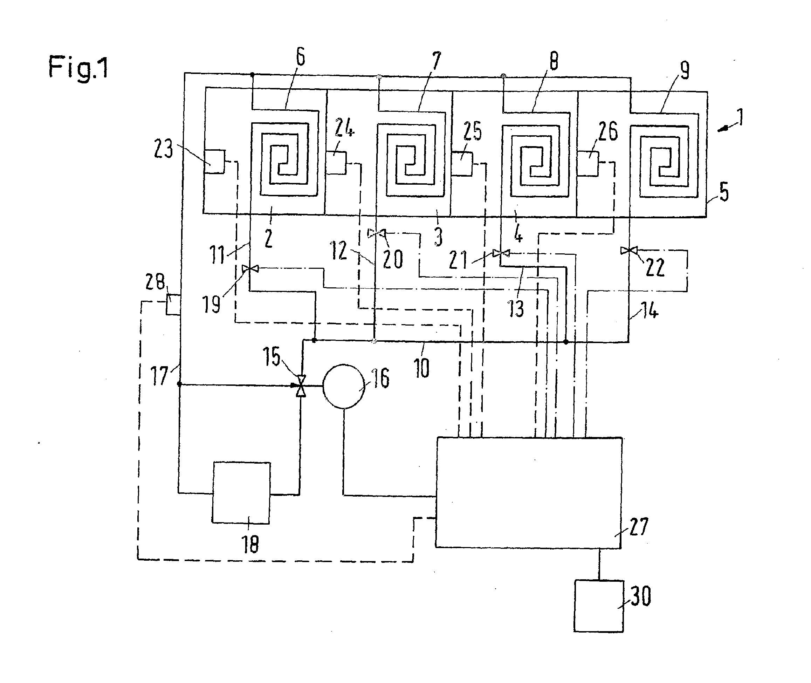

Fig. 1 zeigt eine Heizungsanlage 1 zum Beheizen mehrerer Räume 2-5 in einem Haus. In jedem Raum ist eine Fußbodenheizung vorgesehen. Eingezeichnet sind hierfür die Wärmetauscher 6-9.

Die Erfindung wird im folgenden anhand einer Heizungsanlage mit Fußbodenheizung beschrieben. Es liegt aber auf der Hand, daß das Prinzip der nachfolgend erläuterten Einstellung oder Kompensation auch bei Heizungsanlagen verwendet werden kann, die mit Heizkörpern oder Radiatoren arbeiten oder auch bei Heizungsanlagen, bei denen eine Fußbodenheizung gemeinsam mit Heizkörpern betrieben wird.

In ähnlicher Weise ist die Erfindung auch anwendbar bei Kühldeckensystemen, bei denen nicht heißes Wasser durch Heizkörper oder Wärmetauscher geleitet wird, um einen Raum zu beheizen, sondern kaltes Wasser (oder ein anderes Wärmeträgerfluid), um einen entsprechenden Raum zu kühlen.

Im vorliegenden Fall werden die einzelnen Wärmetauscher 6-9 von einer Heizflüssigkeit, nämlich heißem Wasser, durchströmt, das von einer Vorlaufleitung 10, von der einzelne Stichleitungen 11-14 abgehen, auf die einzelnen Wärmetauscher 6-9 verteilt wird. Am Eingang der Vorlaufleitung 10 befindet sich ein Mischventil 15, das über einen Stellantrieb 16, beispielsweise einen elektrischen Motor verstellt werden kann. Mit Hilfe des Mischventils 15 kann kälteres Wasser aus einer Rücklaufleitung 17, die das Heizwasser aus den Wärmetauschern 6-9 aufnimmt, zugemischt werden. Auf diese Weise ist es möglich, die Vorlauftemperatur unter eine Temperatur, die von einem Heizkessel 18 (oder einer anderen Wärmequelle) stammt, abzusenken.

Die Heizflüssigkeitsmenge, die jedem Wärmetauscher 6-9 tatsächlich zugeführt wird, wird durch Ventile 19-22 bestimmt. Diese Ventile sind von einer gemeinsamen Steuereinrichtung 27 gesteuert. Hierzu sind strichpunktierte Leitungen als Verbindungen zwischen den Ventilen 19-22 und der Steuereinrichtung 27 eingezeichnet. Diese Leitungspfade können einerseits als körperlich vorhandene Signalleitungen ausgebildet sein, beispielsweise in der Form von elektrischen Leitungen oder Glasfaserleitungen. Sie können aber auch leitungslos ausgebildet sein, wenn die entsprechenden Informationen zwischen der Steuereinrichtung 27 und den Ventilen 19 bis 22 durch elektromagnetische Wellen, beispielsweise durch Funkwellen, übertragen werden.

Die Steuereinrichtung 27 bekommt die Information über die Temperatur in jedem Raum 2-5 über Temperaturfühler 23-26, die in jedem Raum 2-5 angeordnet sind. Die zugehörigen Leitungspfade sind gestrichelt eingezeichnet. Auch hier können die entsprechenden Leitungspfade durch körperliche Leitungen ausgebildet sein. Sie können aber auch leitungslos funktionieren, beispielsweise durch Funkwellen.

Die in Fig. 1 dargestellte Trennung der Ventile 19-22 von den Temperaturfühlern 23-26 muß nicht unbedingt gegeben sein. Die Ventile 19-22 und die Temperaturfühler 23-26 können auch jeweils in einer Baueinheit zusammengefaßt sein, ähnlich wie ein Heizkörperthermostatventil. Eine derartige Ausgestaltung bietet sich insbesondere an, wenn anstelle der Wärmetauschern 6-9 für eine Fußbodenheizung ein Heizkörper verwendet wird. Auch bei der Zusammenfassung von Ventilen und Temperaturfühlern in einer Baueinheit besteht aber eine Verbindung zwischen den Heizkörperthermostatventilen und der Steuereinrichtung 27.

Ein Sensor 28 ist in der Rücklaufleitung 17 angeordnet, die das Heizungswasser von allen Wärmetauschern 6-9 zum Mischventil 15 bzw. zum Heizkessel 18 zurückführt. Auch der Sensor 28 ist mit der Steuereinrichtung 27 verbunden. Schließlich kann ein Außentemperatursensor 30 mit der Steuereinrichtung 27 verbunden sein.

Die Wärmetauscher 6-9 haben nicht alle die gleiche Durchflußcharakteristik. Ein Wärmetauscher, der einen größeren Raum beheizen muß, hat in der Regel auch eine längere Durchflußlänge und damit einen größeren Strömungswiderstand als ein Wärmetauscher, der für einen kleineren Raum vorgesehen ist. Dies führt ohne zusätzliche Maßnahmen dazu, daß dann, wenn die beiden Wärmetauscher einen Wärmebedarf ankündigen, beispielsweise aufgrund eines Signals der Temperaturfühler 23-26, und die Ventile 19-22 geöffnet werden, der größte Teil des Heizungswassers in den Wärmetauscher fließen wird, der den kleinsten Strömungswiderstand hat. Dies hat mehrere Nachteile. Zum einen führt dies zu einer erhöhten Rücklauftemperatur von diesem Wärmetauscher, weil das Heizwasser nicht ausreichend abgekühlt ist. Zum anderen wird der Wärmetauscher mit dem größeren Strömungswiderstand unzureichend versorgt, so daß er den Raum nicht ausreichend beheizt. Erwünscht ist vielmehr ein Verhalten, bei dem (im vorliegenden Beispiel) der Wärmetauscher mit dem größeren Durchflußwiderstand auch den größeren Teil des Heizwassers erhält.

Hinzu kommt, daß der Strömungswiderstand des Wärmetauschers nicht unbedingt das einzige Kriterium ist. Auch der Wärmewiderstand des Fußbodens oder der Wärmebedarf des Raumes sind Kriterien dafür, wieviel Heizwasser der jeweilige Wärmetauscher benötigt, um die gewünschte Temperatur im Raum möglichst effizient zu erzeugen. Es macht z.B. einen Unterschied, ob der Fußboden von einem Teppichboden oder von einem Klinkerbelag abgedeckt ist. Auch wird ein nach Süden ausgerichteter Raum weniger Heizwasser benötigen als ein nach Norden ausgerichteter Raum.

Üblicherweise verwendet man eine manuell von außen einstellbare Einstellung, um allen Wärmetauschern 6-9 die gleiche Priorität zu verschaffen. Dies ist jedoch aufwendig und läßt sich in der Regel nicht mit der gewünschten Genauigkeit realisieren. Im vorliegenden Fall wendet man daher eine andere Vorgehensweise an.

In dem Zeitraum, in dem die Wärmetauscher 6-9 Wärme "verbrauchen", also einen Bedarf an Heizungsflüssigkeit haben, der von den Temperaturfühlern 23-26 ermittelt wird, wird ein Öffnungsverhältnis A definiert. Ein Wärmetauscher, der in den letzten 48 Stunden z.B. 12 Stunden aktiv war, hat das Öffnungsverhältnis A = 12/48 = 0,25. Dieses Öffnungsverhältnis wird gelegentlich auch als "Tastverhältnis" bezeichnet.

Im allgemeinen hat ein Wärmetauscher mit einem kleinen Strömungswiderstand ein kleines Öffnungsverhältnis und ein Wärmetauscher mit einem großen Strömungswiderstand ein größeres Öffnungsverhältnis (wobei bei dieser Verallgemeinerung anzunehmen ist, daß die Variationen beim Wärmebedarf und im Fußbodenaufbau klein sind).

Um allen Wärmetauschern die gleiche Priorität zu vermitteln, mit anderen Worten, das gleiche Öffnungsverhältnis zu vermitteln, geht man folgendermaßen vor:

Man mißt das durchschnittliche Öffnungsverhältnis für alle Wärmetauscher über einen vorbestimmten Zeitraum von beispielsweise 48 Stunden. Das Öffnungsverhältnis wird als der Teil der Gesamtzeit definiert, in dem die gemessene Temperatur unter dem Sollwert liegt, geteilt durch den vorbestimmten Zeitraum. Anstelle von 48 Stunden lassen sich natürlich auch andere Zeiträume als vorbestimmter Zeitraum definieren, beilspielsweise eine Woche. Der vorbestimmte Zeitraum dient hauptsächlich dem Zweck, unerwünschte Einflüsse zu beseitigen. So soll die "Einstellung" beispielsweise dann nicht geändert werden, wenn gelüftet wird oder wenn die Sonne scheint.

Danach vergleicht man die Öffnungsverhältnisse A aller Wärmetauscher 6-9 und verwendet das Öffnungsverhältnis als eine spezifische Größe.

Die Wärmetauscher mit den kleinsten Öffnungsverhältnissen A werden "bestraft". Nur der Wärmetauscher mit dem größten Öffnungsverhältnis bleibt ungestraft. Die "Strafe" besteht darin, daß der Durchfluß durch die bestraften Wärmetauscher vermindert wird.

Dies kann auf unterschiedliche Weise erfolgen, beispielsweise dadurch, daß ein Wärmetauscher zwangsweise geschlossen bleibt, auch wenn eigentlich Wärme angefordert wird. Alternativ dazu kann die Hubhöhe des Ventils 19-22 begrenzt werden, d.h. der Wärmetauscher bekommt weniger Heizflüssigkeit als sonst, wobei er über längere Zeit Wärme anfordern muß, was zu dem gewünschten größeren Öffnungsverhältnis führt. Nach einer gewissen Zeit werden dann alle Wärmetauscher 6-9, genauer gesagt ihre Ventile 19-22, das gleiche Öffnungsverhältnis haben. Dieses Öffnungsverhältnis kann beispielsweise im Bereich von 0,5 bis 0,8 liegen. Ein günstiges Öffnungsverhältnis ist beispielsweise 0,6.

Unter Umständen kann es günstig sein, gleichzeitig mit dem "Bestrafen" der Wärmetauscher mit den kleineren Öffnungsverhältnissen den oder die Wärmetauscher mit den größten Öffnungsverhältnissen zu belohnen, d.h. dafür zu sorgen, daß sich die Durchflußmenge durch diese Wärmetauscher erhöht. Die "Belohnung" kann auch in einer geringeren "Strafe" bestehen.

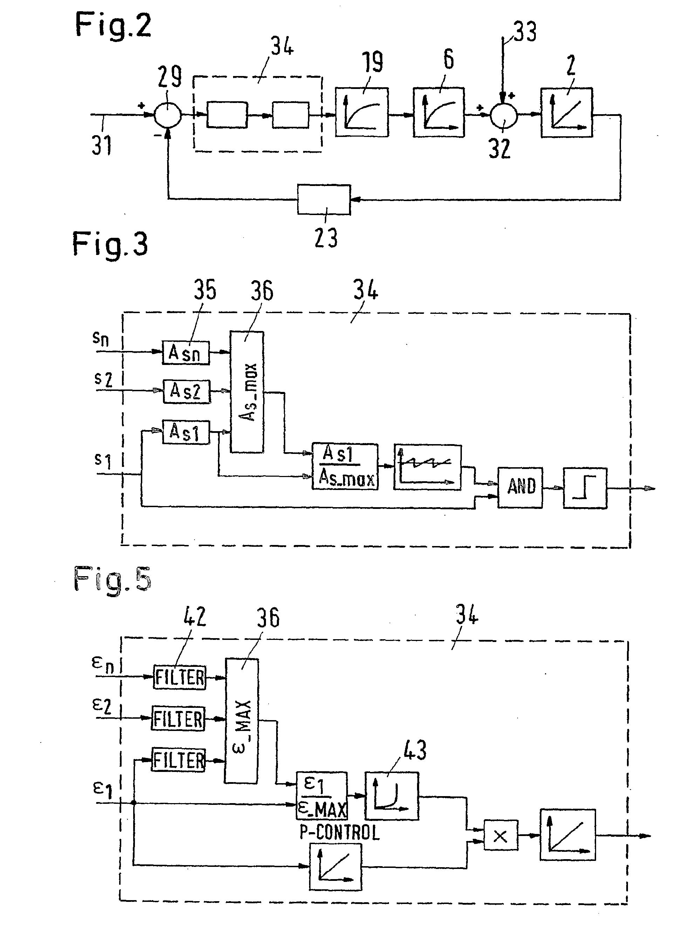

Zwei Möglichkeiten, die Einstellung für die Wärmetauscher 6-9 zu verändern, sind in den Fig. 2 bis 6 dargestellt.

Fig. 2 zeigt einen Regelkreis beispielhaft für den Raum 2. Die Elemente sind hier mit den gleichen Bezugszeichen wie in Fig. 1 versehen. Durch das Ventil 19 wird der Zufluß von Heizflüssigkeit zum Wärmetauscher 6 gesteuert, der damit die Temperatur im Raum 2 beeinflußt. Diese Temperatur wird durch den Temperaturfühler 23 ermittelt und an einem Additionspunkt 29 zurückgemeldet, dem über einen Sollwerteingang 31 auch der Sollwert zugeführt wird. Ein weiterer Additionspunkt 32 ist schematisch dargestellt, an dem Störgrößen 33, beispielsweise externe Temperatureinflüsse, berücksichtigt werden können. Derartige Störgrößen können äußere Temperatureinflüsse sein, die beispielsweise durch eine verstärkte Sonneneinstrahlung oder durch ein Lüften des Raumes erzeugt werden.

Zwischen dem Additionspunkt 29 und dem Ventil 19 ist ein Regler 34 angeordnet, der im folgenden anhand von Fig. 3 näher erläutert werden soll.

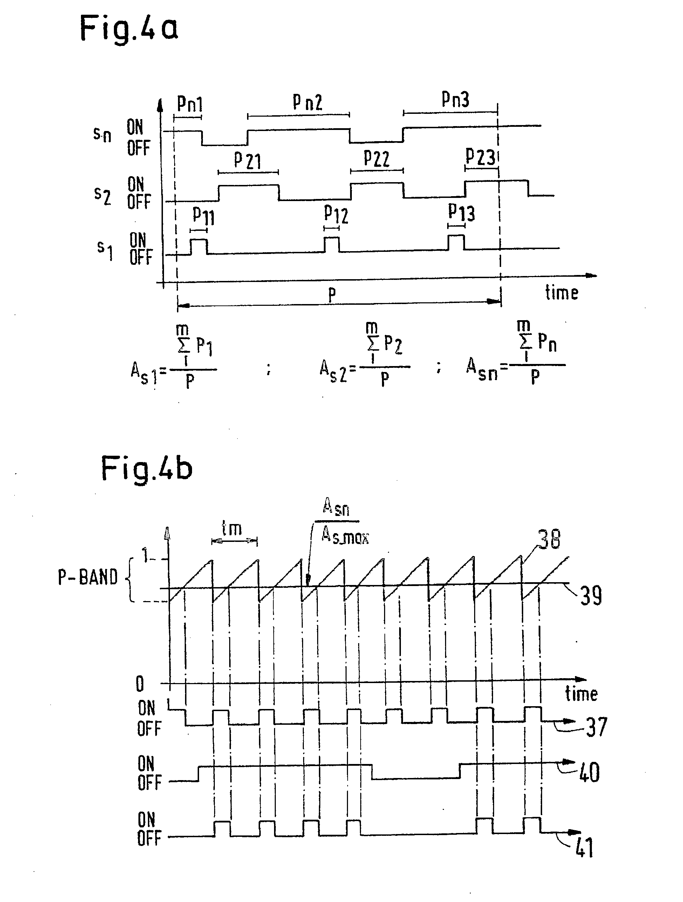

Der Regler 34 erhält über die Steuereinrichtung 27 nicht nur das Öffnungssignal S1 für das Ventil 19, d.h. den eigenen Regelkreis, sondern auch das Signal S2...Sn für die übrigen Regelkreise. Diese Signale sind in Fig. 4a dargestellt, wo sie über einen vorbestimmten Zeitraum P aufgetragen sind. Für jedes Signal S1...Sn wird ein Öffnungsverhältnis ermittelt nach folgender Gleichung:

$$Asn = \frac{\sum\limits_{1}^{m} Pn}{P}$$

wobei Pn die Öffnungszeiten im Signal Sn und m die Anzahl der Öffnungszeiten ist. Aus diesem Öffnungsverhältnis, das auch als Tastverhältnis bezeichnet werden kann, läßt sich der Verbrauch an Wärmeträgerfluid ermitteln. Zur Berechnung des Tastverhältnisses sind Berechnungseinheiten 35 vorgesehen. Selbstverständlich muß nicht für jeden Regler 34 eine eigene Berechnungseinheit vorgesehen sein. Die Berechnungen können auch zentral in der Steuereinrichtung 27 vorgenommen werden.

In einem Maximalwertsucher 35 wird das größte Tastverhältnis As-max ermittelt und aus diesem größten Öffnungsverhältnis und dem Öffnungsverhältnis des aktuell gesteuerten Ventils ein Verhältnis gebildet

$$\frac{Asn}{As - max}$$

Diese Größe wird einem P-Bandregler zugeführt, der daraus ein in Fig. 4b dargestelltes Bestrafungssignal 37 bildet. Dieses Bestrafungssignal wird wie folgt gebildet: Ein sägezahnförmiges Signal mit einer Periode tm und einer vorbestimmten Steigung wird laufend mit dem Öffnungsverhältnis Asn/As-max verglichen. Solange das Öffnungsverhältnis kleiner ist als das Sägezahnsignal 38 ist das Bestrafungssignal 37 on. Sobald das Sägezahnsignal 38 das Öffnungsverhältnis-Signal 39 überschreitet, ist das Bestrafungssignal 37 off.

Unter dem Bestrafungssignal 37 ist das unbearbeitete Steuersignal 40 für das Ventil 19 dargestellt. Dieses Steuersignal 40 wird nun mit dem Bestrafungssignal logisch verknüpft, um das aktuelle Steuersignal 41 zu erhalten. Das aktuelle Steuersignal 41 ist nur dann "on", wenn sowohl das unbearbeitete Steuersignal 40 als auch das Bestrafungssignal 37 "on" ist. In den übrigen Zeiten ist das bearbeitete Steuersignal 41 "off". Auf diese Weise läßt sich der Durchfluß durch den Wärmetauscher 6 verringern. Es ist zu erkennen, daß bei einem größeren Öffnungsverhältnis die Kurve 39 nach oben verschoben wird, so daß vom unbearbeiteten Steuersignal 40 weniger Anteile durch das Bestrafungssignal 37 "abgeschnitten" werden.

Letztendlich handelt es sich um eine einfache Ein-/Aus-Regelung, mit der der Durchfluß der Heizungsflüssigkeit durch die Wärmetauscher 6-9 geregelt werden kann und zwar in Abhängigkeit von dem Wärmebedarf aller Wärmetauscher 6-9, die an die gleiche Vorlaufleitung 10 angeschlossen sind.

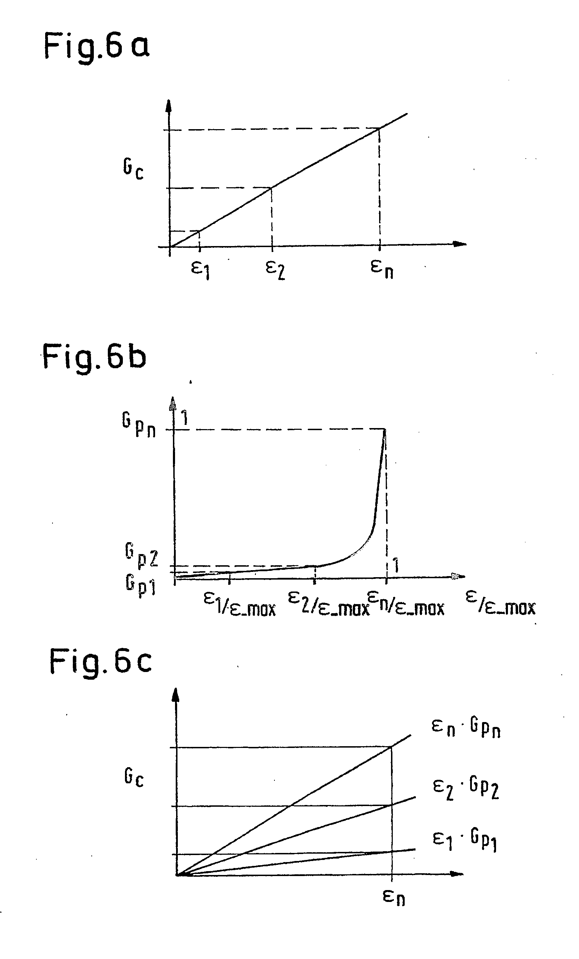

In Fig. 5 ist eine zweite Möglichkeit dargestellt. Hier werden dem Regler 34 nicht nur die Sollwertabweichung e1 des eigenen Regelkreises zugeführt, sondern auch die Sollwertabweichungen ε2...εn der anderen Regelkreise, die an die gleiche Vorlaufleitung 10 angeschlossen sind. Über Filter 42 werden diese Sollwertabweichungen einem Maximalwertbildner 36 zugeführt. Aus der aktuellen Sollwertabweichung sn und der maximalen Sollwertabweichung ε-max wird ein Quotient gebildet, der die relative Sollwertabweichung darstellt. Die relative Sollwertabweichung wird einem Bestrafungsfaktorbildner 43 zugeführt, der in Abhängigkeit von der relativen Sollwertabweichung einen Verstärkungsfaktor Gpn ausgibt. Ein entsprechender Kurvenverlauf mit dem Bestrafungsfaktor ist in Fig. 6b dargestellt. Dieser Bestrafungsfaktor wird dann mit dem in Fig. 6a dargestellten Reglersignal multipliziert, so daß sich die in Fig. 6c dargestellten Verstärkungsfaktoren bei unterschiedlichen Sollwertabweichungen ergeben. Beispielsweise kann die "Strafe" dann darin bestehen, daß kleinere Thermostatventilverstärkungen vorgenommen werden oder ein kleinerer Differenzdruck über den jeweiligen Wärmetauscher bei der Regelung von Strangventilen erzeugt wird.

Mit dem in Fig. 1 dargestellten Temperatursensor 28 in der Rücklaufleitung 17 können weitere Vorteile erreicht werden. Man kann nämlich die Temperatur in der Rücklaufleitung 17 als weiteres Kriterium dafür verwenden, ob die Wärmetauscher 6-9 optimal versorgt werden.

Wenn beispielsweise ein Wärmetauscher 6-9 öffnet oder schließt, dann wird sich die gemeinsame Rücklauftemperatur relativ schnell ändern. Wenn man weiß, um welchen Wärmetauscher es sich handelt und dessen Einfluß auf die Rücklauftemperatur kennt, kann man Unterschiede im Fußbodenaufbau und im Wärmebedarf kompensieren und zwar folgendermaßen:

Man ermittelt die gemeinsame Rücklauftemperatur vor dem Öffnen und Schließen eines Wärmetauschers. Man ermittelt die Temperatur nach dem Öffnen oder Schließen des Wärmetauschers. Wenn die Temperatur bei jedem Öffnen des Wärmetauschers ansteigt und bei jedem Schließen fällt, dann wird der Wärmetauscher bestraft, d.h. man drosselt die Durchflußmenge. Im umgekehrten Fall wird der Wärmetauscher belohnt, d.h. er bekommt mehr Wärmeträgerflüssigkeit.

Eine derartige Regelung ist insbesondere dann von Vorteil, wenn man die Sollwertabweichung kennt. Wenn man diese außer acht läßt, müßte man andere Maßnahmen treffen, um zu vermeiden, daß die Wärmetauscher so "streng" bestraft werden können, daß sie bei einer gegebenen Vorlauftemperatur nicht die notwendige Wärme liefern können.

Die Kompensierung oder Einstellung kann auch mit einer Vorlauftemperaturregelung kombiniert werden, wie sie in DE 100 57 361 A1 beschrieben ist. Dadurch erreicht man neben einem gleichen Wärmebedarf von allen Wärmetauschern 6-9 im Prinzip auch den gleichen Wärmebedarf unabhängig von der Belastung während der ganzen Heizungssaison.

**Patentansprüche**

1. Verfahren zum Einstellen mehrerer parallel geschalteter Wärmetauscher, denen man ein Wärmeträgermedium zuführt, **gekennzeichnet durch** folgende Schritte:

a) Ermitteln für jeden Wärmetauscher einer für den Wärmebedarf des Wärmetauschers spezifischen Größe in einem vorbestimmten Zeitraum anhand einer Öffnungszeit eines dem Wärmetauscher zugeordneten Ventils in dem Zeitraum oder anhand einer Sollwertabweichung,
b) vergleichen der spezifischen Größen aller Wärmetauscher miteinander und
c) verändern der Einstellung des Wärmetauschers mit der den geringsten Wärmebedarf anzeigenden spezifischen Größe in dem Sinn, den Wärmebedarf zu vergrößern und dabei das Verhältnis der Öffnungszeit zum bestimmten Zeitraum zu vergrößern oder die Sollwertabweichung zu verringern.

2. Verfahren nach Anspruch 1, **dadurch gekennzeichnet, daß** man bei allen Wärmetauschern die Einstellung in dem genannten Sinn verändert, mit Ausnahme des Wärmetauschers, dessen spezifische Größe den größten Wärmebedarf anzeigt.

3. Verfahren nach Anspruch 1 oder 2, **dadurch gekennzeichnet, daß** man bei mindestens einem anderen Wärmetauscher die Einstellung in dem Sinn verändert, die spezifische Größe zu vergrößern.

4. Verfahren nach einem der Ansprüche 1 bis 3, **dadurch gekennzeichnet, daß** man eine Öffnungszeit im Bereich von 50 bis 80 % des vorbestimmten Zeitraumes für alle Wärmetauscher einstellt.

5. Verfahren nach einem der Ansprüche 1 bis 4, **dadurch gekennzeichnet, daß** man eine gemeinsame Rücklauftemperatur der Wärmetauscher ermittelt und feststellt, bei welchem Wärmetauscher die Rücklauftemperatur steigt oder fällt, wenn der Wärmetauscher geöffnet oder geschlossen wird, wobei die Einstellung eines Wärmetauschers im Sinn einer Verringerung der spezifischen Größe verändert wird, wenn die Rücklauftemperatur beim Öffnen dieses Wärmetauschers steigt.

6. Verfahren nach einem der Ansprüche 1 bis 5, **dadurch gekennzeichnet, daß** man die Einstellung durch Änderung einer Verstärkung in einem Regler ändert.

7. Verfahren nach einem der Ansprüche 1 bis 6, **dadurch gekennzeichnet, daß** man die Einstellung durch Änderung einer Druckdifferenz über den Wärmetauscher verändert.

**8.** Verfahren nach einem der Ansprüche 1 bis 7, **dadurch gekennzeichnet, daß** man die Einstellung dadurch verändert, daß man die maximale Öffnungsweite des Ventils des Wärmetauschers verändert.

**9.** Verfahren nach einem der Ansprüche 1 bis 8, **dadurch gekennzeichnet, daß** man die Einstellung durch Veränderung der Öffnungszeiten des Ventil verändert.

**10.** Verfahren nach Anspruch 9, **dadurch gekennzeichnet, daß** man das Ventil in Öffnungszeiten, die durch einen Wärmebedarf bestimmt sind, periodisch schließt.

**Claims**

**1.** Method for setting a plurality of heat exchangers which are connected in parallel and to which a heat exchange medium can be fed, **characterized by** the following steps:

a) determining, for each heat exchanger, of a specific variable for the heat requirement of the heat exchanger in a predefined time period using an opening time in the time period of a valve which is assigned to the heat exchanger or using a setpoint value deviation,
b) comparing of the specific variables of all the heat exchangers among one another, and
c) changing of the setting of the heat exchanger with the specific variable which indicates the lowest heat requirement in the direction of increasing the heat requirement and in the process of increasing the ratio of the opening time to the defined time period or of reducing the setpoint value deviation.

**2.** Method according to Claim 1, **characterized in that** the setting is changed in the stated direction in all heat exchangers, with the exception of the heat exchanger, the specific variable of which indicates the greatest heat requirement.

**3.** Method according to Claim 1 or 2, **characterized in that** the setting is changed in at least one other heat exchanger in the direction of increasing the specific variable.

**4.** Method according to one of Claims 1 to 3, **characterized in that** an opening time in the range of from 50 to 80% of the predefined time period is set for all heat exchangers.

**5.** Method according to one of Claims 1 to 4, **characterized in that** a common return temperature of the heat exchangers is determined and it is established, in which heat exchanger the return temperature rises or falls when the heat exchanger is opened or closed, the setting of a heat exchanger being changed in the direction of a reduction in the specific variable when the return temperature rises during opening of the said heat exchanger.

**6.** Method according to one of Claims 1 to 5, **characterized in that** the setting is changed by way of a change in an amplification in a controller.

**7.** Method according to one of Claims 1 to 6, **characterized in that** the setting is changed by way of a change in a pressure difference across the heat exchanger.

**8.** Method according to one of Claims 1 to 7, **characterized in that** the setting is changed by the maximum opening width of the valve of the heat exchanger being changed.

**9.** Method according to one of Claims 1 to 8, **characterized in that** the setting is changed by way of the opening times of the valve being changed.

**10.** Method according to Claim 9, **characterized in that** the valve is closed periodically in opening times which are determined by a heat requirement.

**Revendications**

**1.** Procédé de réglage de plusieurs échangeurs de chaleur branchés en parallèle auxquels on achemine un fluide caloporteur, **caractérisé par** les étapes suivantes :

a) détermination pour chaque échangeur de chaleur d'une grandeur spécifique pour le besoin thermique de l'échangeur de chaleur dans un laps de temps prédéfini à l'aide d'un temps d'ouverture d'une soupape associée à l'échangeur de chaleur dans le laps de temps ou à l'aide d'un écart par rapport à une valeur théorique,
b) comparaison entre elles des grandeurs spécifiques de tous les échangeurs de chaleur et
c) modification du réglage de l'échangeur de chaleur avec la grandeur spécifique affichant le plus faible besoin thermique dans l'optique d'augmenter le besoin thermique et d'augmenter alors le rapport entre le temps d'ouverture et le laps de temps défini ou de réduire l'écart par rapport à la valeur théorique.

**2.** Procédé selon la revendication 1, **caractérisé en ce**

**qu'**on affiche pour tous les échangeurs de chaleur le réglage dans l'optique indiquée, à l'exception de l'échangeur de chaleur dont la grandeur spécifique affiche le plus fort besoin thermique.

3. Procédé selon la revendication 1 ou 2, **caractérisé en ce qu'**on modifie le réglage dans l'au moins un autre échangeur de chaleur dans l'optique d'augmenter la grandeur spécifique.

4. Procédé selon l'une quelconque des revendications 1 à 3, **caractérisé en ce qu'**on règle un temps d'ouverture dans la fourchette de 50 à 80 % du laps de temps prédéfini pour tous les échangeurs de chaleur.

5. Procédé selon l'une quelconque des revendications 1 à 4, **caractérisé en ce qu'**on détermine une température de reflux commune des échangeurs de chaleur, et on établit dans quel échangeur de chaleur la température de reflux augmente ou chute lorsque l'échangeur de chaleur est ouvert ou fermé, le réglage d'un échangeur de chaleur étant modifié dans l'optique d'une diminution de la grandeur spécifique lorsque la température de reflux augmente lors de l'ouverture de cet échangeur de chaleur.

6. Procédé selon l'une quelconque des revendications 1 à 5, **caractérisé en ce qu'**on modifie le réglage en modifiant une amplification dans un régulateur.

7. Procédé selon l'une quelconque des revendications 1 à 6, **caractérisé en ce qu'**on modifie le réglage en modifiant une différence de pression par le biais de l'échangeur de chaleur.

8. Procédé selon l'une quelconque des revendications 1 à 7, **caractérisé en ce qu'**on modifie le réglage en modifiant la largeur d'ouverture maximale de la soupape de l'échangeur de chaleur.

9. Procédé selon l'une quelconque des revendications 1 à 8, **caractérisé en ce qu'**on modifie le réglage en modifiant les temps d'ouverture de la soupape.

10. Procédé selon la revendication 9, **caractérisé en ce qu'**on ferme périodiquement la soupape pendant des temps d'ouverture qui sont définis par un besoin thermique.

Fig.1

# Fig.2

# Fig.3

# Fig.5

# Fig.4a

$$A_{s1}=\frac{\sum\limits_{1}^{m}P_1}{P} \quad ; \quad A_{s2}=\frac{\sum\limits_{1}^{m}P_2}{P} \quad ; \quad A_{sn}=\frac{\sum\limits_{1}^{m}P_n}{P}$$

# Fig.4b

# Fig.6a

# Fig.6b

# Fig.6c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10057361 A1
- DE 19911866 A1

- DE 3708449 A1